(19) Europäisches Patentamt

European Patent Office

Office européen des brevets

(11) **EP 4 046 706 A1**

(12) **EUROPEAN PATENT APPLICATION**
published in accordance with Art. 153(4) EPC

(43) Date of publication:
**24.08.2022 Bulletin 2022/34**

(21) Application number: **20875873.0**

(22) Date of filing: **15.10.2020**

(51) International Patent Classification (IPC):
***B01J 20/26*** (2006.01)  ***B01J 20/34*** (2006.01)

(52) Cooperative Patent Classification (CPC):
**B01J 20/26; B01J 20/34**

(86) International application number:
**PCT/JP2020/038947**

(87) International publication number:
**WO 2021/075506 (22.04.2021 Gazette 2021/16)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.10.2019 JP 2019191204**

(71) Applicant: **Sumitomo Seika Chemicals Co., Ltd.
Kako-gun, Hyogo 675-0145 (JP)**

(72) Inventor: **YAMAMOTO, Tomoe
Himeji-shi, Hyogo 672-8076 (JP)**

(74) Representative: **Vossius & Partner
Patentanwälte Rechtsanwälte mbB
Siebertstraße 3
81675 München (DE)**

(54) **METHOD FOR REGENERATING WATER-ABSORBING RESIN PARTICLES**

(57)    Disclosed is a method for regenerating water-absorbing resin particles including: treating water-absorbing resin particles that have absorbed water with hot water; and treating the water-absorbing resin particles after the hot water treatment with a hydrophilic organic solvent.

EP 4 046 706 A1

## Description

### Technical Field

The present invention relates to a method for regenerating water-absorbing resin particles.

### Background Art

Water-absorbing resin particles have widely been used in the fields of sanitary materials such as paper diapers and sanitary products, agricultural and horticultural materials such as water retention agents and soil improvement agents, industrial materials such as waterproofing agents and dew condensation inhibitors, and the like. Water-absorbing resin particles after use are typically discarded. On the other hand, water-absorbing resin particles after use are regenerated and reused in some cases from the viewpoints of environmental protection, reduction of wastes, economy, and the like (Patent Literature 1, for example).

### Citation List

### Patent Literature

[Patent Literature 1] Japanese Unexamined Patent Publication No. 2013-198862

### Summary of Invention

### Technical Problem

A method for regenerating water-absorbing resin particles in the related art has a problem that water absorption performance of particles obtained after regeneration is degraded as compared with particles before water absorption.
An object of the present invention is to provide a method for regenerating water-absorbing resin particles with an excellent recovery of water absorption performance.

### Solution to Problem

A method for regenerating water-absorbing resin particles according to the present invention includes: treating water-absorbing resin particles that have absorbed water with hot water; and treating the water-absorbing resin particles after the hot water treatment with a hydrophilic organic solvent.
The regeneration method may further include: removing at least a part of water and the solvent from the water-absorbing resin particles after the treatment with the hydrophilic organic solvent to adjust a total amount of the water and the solvent to 15 % by mass or less with respect to a total amount of solid content of the water-absorbing resin particles, the water and the solvent.

### Advantageous Effects of Invention

According to the present invention, it is possible to provide a method for regenerating water-absorbing resin particles with an excellent recovery of water absorption performance.

### Brief Description of Drawings

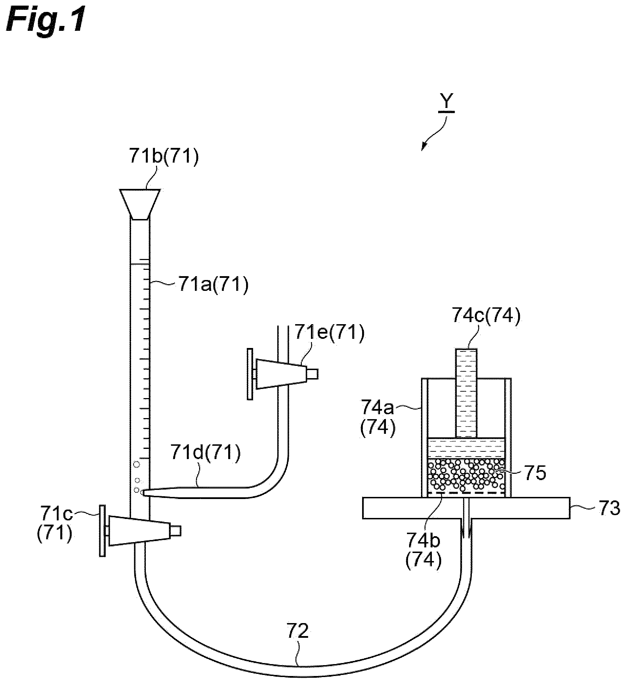

FIG. 1 is a schematic diagram illustrating a method for measuring the water absorption amount under a load.

### Description of Embodiments

Hereinafter, some embodiments of the present invention will be described in detail. However, the present invention is not limited to the following embodiments.
In regard to numerical ranges described in stages in the present specification, an upper limit value or a lower limit value of a numerical range in a certain stage can be combined with an upper limit value or a lower limit value of a numerical range in another stage in any selected manner. In regard to numerical ranges described in the present specification, upper limit values or lower limit values of the numerical ranges may be replaced with values described in examples. "Water-soluble" means that the substance shows solubility of equal to or greater than 5% by mass to water at 25°C. Materials exemplified in the present specification may be used alone, or two or more kinds may be used in combination. Content of each component in a composition means a total amount of a plurality of substances that represent in the composition in a case in which the plurality of substances corresponding to each component are present in the composition, unless particularly stated otherwise. "Physiological saline" refers to an aqueous solution of 0.9% by mass of sodium chloride.

The method for regenerating water-absorbing resin particles according to the present embodiment includes: treating water-absorbing resin particles that have absorbed water with hot water; and treating the water-absorbing resin particles after the hot water treatment with a hydrophilic organic solvent.

The water-absorbing resin particles that have absorbed water (the water-absorbing resin particles after water absorption) subjected to the regeneration method according to the present embodiment may be any water-absorbing resin particles as long as they have absorbed water, and may be water-absorbing resin particles after use, for example. The water-absorbing resin particles after water absorption may be water-absorbing resin particles that have absorbed body fluid such as urine and blood and any selected water-based solution such as rainwater and seawater, for example. The regeneration method according to the present embodiment is particularly suitable for regeneration of water-absorbing resin particles after they absorb ion-containing water-based solution such as urine. The water-absorbing resin particles that have absorbed water subjected to the regeneration method according to the present embodiment do not include a hydrogel-like polymer that is obtained in the process of producing water-absorbing resin particles through polymerization of monomer(s). Hereinafter, the water-absorbing resin particles that have absorbed water subjected to the regeneration method according to the present embodiment will also be referred to as a "swollen gel".

For example, a swollen gel in a paper diaper after use may be in a state in which it is mixed with a fibrous substance such as pulp. In the regeneration method according to the present embodiment, each step of the treatment with the hot water and the treatment with the hydrophilic organic solvent, which will be described below in detail, may be performed on the swollen gel alone or may be performed on a mixture of the swollen gel and other materials such as a fibrous substance. In a case in which a mixture of a swollen gel and other materials such as a fibrous substance is subjected to the regeneration method according to the present embodiment, a step of separating the swollen gel from other materials such as a fibrous substance may be performed in advance before the treatment with the hot water, or may be performed before the treatment with the hydrophilic organic solvent after the treatment with the hot water, before a drying step after the treatment with the hydrophilic organic solvent, or after the drying step, for example.

As a method for separating the swollen gel from the mixture of the swollen gel and the fibrous substance such as pulp, any method in which the swollen gel (water-absorbing resin particles) are substantially dissolved or are not decomposed may be used, and examples thereof include a method of filtering a mixture dispersion containing the swollen gel and the pulp in a liquid through screening and a method of performing wind power classification after drying. The separation of the swollen gel from the mixture may be performed together in the treatment with the hot water, which will be described below.

[Treatment with hot water]

Treatment of swollen gel with hot water may be bringing the swollen gel into contact with hot water, and specifically, it is possible to achieve the treatment by a method such as immersing of the swollen gel in hot water, immersing of swollen gel in hot water while stirring the swollen gel, or pouring hot water to the swollen gel, for example. It is possible to remove at least a part of impurities absorbed in the swollen gel or adhering to the swollen gel and to wash the swollen gel by treating the swollen gel with the hot water. Also, a disinfecting effect of the swollen gel can also be obtained through the treatment with the hot water. From the viewpoints of washing efficiency and the disinfecting effect, a method of immersing the swollen gel into hot water is preferably used, and a method of immersing the swollen gel into hot water while stirring the swollen gel is more preferably used as the treatment with hot water.

The hot water in the present specification refers to water at 65°C or more. From the viewpoints of washing efficiency and disinfecting effect, the water temperature of the hot water is preferably equal to or greater than 65°C, is more preferably equal to or greater than 80°C, is further preferably equal to or greater than 90°C, and is yet further preferably equal to or greater than 95°C.

As the water used for the treatment with the hot water, other components may be contained in water within a range in which the swollen gel that is typically after use is purified as compared with that before the treatment with the hot water and the water-absorbing resin particles are not substantially dissolved or decomposed. Preferable examples of water used for the treatment with hot water include pure water, ion-exchanged water, distilled water, tap water, and filtrated river water. pH of the hot water is preferably 5 to 9 and is more preferably 6 to 8.

The amount of hot water used may be equal to or greater than 5 times, is preferably equal to or greater than 10 times, and is more preferably equal to or greater than 50 times the total amount of the swollen gel. The amount of hot water used may be equal to or less than 100 times the total amount of the swollen gel, for example. The time of the treatment with hot water may be appropriately adjusted depending on the amount of swollen gel to be treated and may be equal to or greater than 10 minutes, may be equal to or greater than 30 minutes, or may be equal to or greater than 1 hour, for example. The time of the treatment with hot water may be within 5 hours or within 2 hours, for example. The treatment with hot water may be performed a plurality of times, for example, twice. When the treatment with hot water is performed a plurality of times, it is only necessary to separate, through filtration, the swollen gel after the treatment with hot water and the hot water and to perform the treatment with hot water as described above again. Typically, a phenomenon in which the swollen gel further absorbs water and swells through the treatment with hot water is observed.

[Treatment with hydrophilic organic solvent]

In the regeneration method according to the present embodiment, the swollen gel is treated with hot water and is further treated with a hydrophilic organic solvent. The treatment of the swollen gel with the hydrophilic organic solvent may mean bringing the swollen gel and the hydrophilic organic solvent into contact with each other, and specifically, the treatment can be performed by a method of immersing the swollen gel into the hydrophilic organic solvent, a method of immersing the swollen gel into the hydrophilic organic solvent while stirring the swollen gel, a method of pouring the hydrophilic organic solvent to the swollen gel, or the like.

It is possible to cause at least a part of water contained in the swollen gel to be separated to the outside of the particles by treating, with the hydrophilic organic solvent, the swollen gel after the treatment with hot water. Typically, a gel with a smaller volume than the swollen gel before the treatment with the hydrophilic organic solvent is obtained by the treatment with the hydrophilic organic solvent. Also, it is possible to remove at least a part of impurities adhering to the surface of the swollen gel together by the treatment with the hydrophilic organic solvent. As the treatment with the hydrophilic organic solvent, a method of immersing the swollen gel into the hydrophilic organic solvent is preferably used, and a method of immersing the swollen gel into the hydrophilic organic solvent while stirring the swollen gel is more preferably used.

The hydrophilic organic solvent in the present specification refers to an organic solvent that shows a solubility of 100 g/L or more with respect to water at 20°C. Examples of the hydrophilic organic solvent may include alcohol, ketone, and the like. Alcohol may contain 1 to 5 carbon atoms, for example, and preferably contains 1 to 3 carbon atoms, and specific examples thereof include methanol, ethanol, isopropanol, and the like. Ketone contains 1 to 5 carbon atoms, for example, and preferably contains 1 to 3 carbon atoms, and specific examples thereof include acetone.

The hydrophilic organic solvent may have a boiling point of 50 to 90°C, for example. As the hydrophilic organic solvent, methanol and acetone are preferably used, and methanol is more preferably used, in terms of high water absorption performance of the water-absorbing resin particles after the regeneration. As the hydrophilic organic solvent, one kind may be used, or a plurality of kinds may be used in combination.

The hydrophilic organic solvent may be used for treating the swollen gel in a state of a mixture solution in which the hydrophilic organic solvent is mixed with other solvents such as water and/or components. The content of the hydrophilic organic solvent in the mixture solution may be equal to or greater than 75% by mass, is preferably equal to or greater than 80% by mass, is more preferably equal to or greater than 90% by mass, is further preferably equal to or greater than 95% by mass, and is yet further preferably equal to or greater than 98% by mass with respect to the total amount of the mixture solution.

The amount of the hydrophilic organic solvent used may be equal to or greater than 1 time, may be equal to or greater than 3 times, may be equal to or greater than 5 times, and is preferably equal to or greater than 10 times the total mass of the swollen gel. The amount of the hydrophilic organic solvent used may be equal to or less than 20 times the total mass of the swollen gel, for example.

It is only necessary for the treatment with the hydrophilic organic solvent to be performed at a temperature that is equal to or greater than a room temperature and less than a boiling point of the hydrophilic organic solvent used, for example, and specifically, it is possible to perform the treatment at 20 to 50°C, for example.

After bringing the swollen gel into contact with the hydrophilic organic solvent, it is preferable to separate at least a part of the hydrophilic organic solvent used from the gel. Examples of the separation method include a method of performing filtration using a sieve or a filter, a method of performing separation using a centrifugal force, and the like. The hydrophilic organic solvent separated after use may be purified through a process such as distillation and may then be reused for the treatment with the hydrophilic organic solvent.

In a case in which the treatment with the hydrophilic organic solvent is performed through immersion, the treatment may be performed a plurality of times by exchanging the organic hydrophilic solvent with a new one. In a case in which the treatment with the hydrophilic organic solvent is performed a plurality of times, it is preferable to separate at least a part of the hydrophilic organic solvent used in the treatment from the gel once and to perform the following treatment.

The treatment with the hydrophilic organic solvent may be performed for 30 minutes or more, 1 hour or more, or 2 hours or more or may be performed for 5 hours or less, 3 hours or less, or 2 hours or less, for example, in total.

The total amount of water and the hydrophilic organic solvent with respect to the total amount of gel (a total amount of the solid content of the water-absorbing resin particles, the water, and the hydrophilic organic solvent) may be equal to or less than 90% by mass, may be equal to or less than 85% by mass, and is preferably equal to or less than 80% by mass in the gel after the treatment with the hydrophilic organic solvent is performed once or a plurality of times as needed. In the gel after the treatment with the hydrophilic organic solvent, the mass proportion of the water and the hydrophilic organic solvent with respect to the total amount of gel may be equal to or greater than 50% by mass, for example.

[Drying treatment]

After the treatment with the hydrophilic organic solvent, it is preferable to remove at least a part of the water and the hydrophilic organic solvent contained in the gel. Removing of at least a part of the water and the hydrophilic organic solvent includes a case in which a part of only water is removed, a case in which a part of only the hydrophilic organic solvent is removed, and a case in which at least a part of each of the water and the hydrophilic organic solvent is removed.

Examples of a method of removing the water and the hydrophilic organic solvent include heating and drying, pressure-reduced drying, azeotropic distillation, and the like. Specifically, as the azeotropic distillation, it is possible to remove the water and/or the hydrophilic organic solvent by performing the azeotropic distillation by performing heating from the outside in a state in which the gel containing the water and/or the hydrophilic organic solvent is dispersed in a hydrocarbon dispersion medium and refluxing the hydrocarbon dispersion medium, for example.

As the hydrocarbon dispersion medium used in the azeotropic distillation, a chain aliphatic hydrocarbon with 6 to 8 carbon atoms or an alicyclic hydrocarbon with 6 to 8 carbon atoms may be used. Examples of the hydrocarbon dispersion medium include chain aliphatic hydrocarbon such as n-hexane, n-heptane, 2-methylhexane, 3-methylhexane, 2,3-dimethylpentane, 3-ethylpentane, and n-octane; alicyclic hydrocarbon such as cyclohexane, methylcyclohexane, cyclopentane, methylcyclopentane, trans-1,2-dimethylcyclopentane, cis-1,3-dimethylcyclopentane, and trans-1,3-dimethylcyclopentane; aromatic hydrocarbon such as benzene, toluene, and xylene, and the like. The hydrocarbon dispersion medium may be used alone, or two or more kinds may be used in combination. As the pressure-reduced drying, it is possible to perform the pressure-reduced drying on gel extracted by filtration using decantation or a filter, for example. From the viewpoint of preventing performance of the regenerated water-absorbing resin particles from being excessively degraded, removal of water through azeotropic distillation is preferably used. Also, the azeotropic distillation is also preferable in terms of the point that aggregation of particles occurring during the drying treatment is curbed. As a method of removing the water and the solvent, one kind of these methods may be used, or a plurality of kinds may be combined.

The removal of the water and the solvent is preferably performed such that the total amount of the water and the hydrophilic organic solvent with respect to the total amount of the solid content of the water-absorbing resin particles, the water, and the hydrophilic organic solvent in the gel is equal to or less than 15% by mass and is more preferably equal to or less than 10% by mass.

It is possible to regenerate the water-absorbing resin particles and to achieve a state close to that before use (before water absorption) by performing the treatment with the hot water and the treatment with the hydrophilic organic solvent, and if needed, removal of the water and the hydrophilic organic solvent.

[Water-absorbing resin particles]

The water-absorbing resin particles subjected to the regeneration method according to the present embodiment may contain a crosslinking polymer formed by polymerizing a monomer containing an ethylenically unsaturated monomer, for example. The crosslinking polymer includes a monomer unit derived from an ethylenically unsaturated monomer. The water-absorbing resin particles can be produced by a method including a step of polymerizing a monomer including an ethylenically unsaturated monomer, for example. Examples of the polymerization method include a reverse phase suspension polymerization method, an aqueous solution polymerization method, a bulk polymerization method, and a precipitation polymerization method.

An ethylenically unsaturated monomer may be water-soluble. Examples of the water-soluble ethylenically unsaturated monomer include (meth)acrylic acid and salts thereof, 2-(meth)acrylamide-2-methylpropane sulfonic acid and salts thereof, (meth)acrylamide, N,N-dimethyl (meth)acrylamide, 2-hydroxyethyl (meth)acrylate, N-methylol (meth)acrylamide, polyethylene glycol mono(meth)acrylate, N,N-diethylaminoethyl (meth)acrylate, N,N-diethylaminopropyl (meth)acrylate, diethylaminopropyl (meth)acrylamide, and the like. In a case in which the ethylenically unsaturated monomer includes an amino group, the amino group may be quaternized. The ethylenically unsaturated monomer may be used alone, and two or more kinds may be used in combination.

In a case in which the ethylenically unsaturated monomer includes an acid group, the acid group may be neutralized with an alkaline neutralizing agent and may then be used for a polymerization reaction. The degree of neutralization of the ethylenically unsaturated monomer achieved with the alkaline neutralizing agent may be, for example, 10 to 100 mol%, 50 to 90 mol%, or 60 to 80 mol% of the acid group in the ethylenically unsaturated monomer, for example.

From the viewpoint of easiness in acquisition for industrial purposes, ethylenically unsaturated monomer may contain at least one kind of compound selected from a group consisting of a (meth)acrylic acid and salts thereof, acrylamide, methacrylamide, and N,N-dimethylacrylamide. The ethylenically unsaturated monomer may contain at least one kind of compound selected from a group consisting of (meth)acrylic acid and salts thereof and acrylamide.

As a monomer for obtaining the water-absorbing resin particles, a monomer other than the above-mentioned ethylenically unsaturated monomer may be used. Such a monomer can be mixed and used in an aqueous solution containing the above-mentioned ethylenically unsaturated monomer, for example. The amount of used ethylenically unsaturated monomer may be 70 to 100 mol% with respect to the total amount of monomer. The proportions of a (meth)acrylic acid and salts thereof may be 70 to 100 mol% with respect to the total amount of monomer.

The water-absorbing resin particles may be water-absorbing resin particles crosslinked (surface-crosslinked) in the vicinity of the surface. Also, the water-absorbing resin particles may be constituted only of polymer particles and may further contain various additional components selected from a gel stabilizer, a metal chelating agent, and a flowability improver (lubricant), for example. The additional components can be disposed inside the polymer particles, on the surfaces of the polymer particles, or both of them. The additional components may be a flowability improver (lubricant). The flowability improver may contain inorganic particles. Examples of the inorganic particles include silica particles such as amorphous silica.

As the shape of the water-absorbing resin particles subjected to the regeneration method according to the present embodiment before water absorption, a substantially spherical shape, a crushed shape, a granular shape, a shape formed by aggregating primary particles with these shapes, or the like may be employed. The medium particle diameter of the water-absorbing resin particles according to the present embodiment before water absorption may be 130 to 800 μm, 200 to 850 μm, 250 to 700 μm, or 300 to 600 μm, for example.

The regeneration method according to the present embodiment is suitable for regenerating the water-absorbing resin particles with CRC of about 10 to 60 g/g before use, for example. The regeneration method according to the present embodiment has a high regeneration effect in regeneration of the water-absorbing resin particles with CRC of about 10 to 40 g/g before use, in particular, and can recover CRC of the water-absorbing resin particles to a level equivalent to that before use or to a level close to that before use.

CRC of the water-absorbing resin particles before use subjected to the regeneration method according to the present embodiment and of the water-absorbing resin particles after regeneration by the regeneration method according to the present embodiment may be equal to or greater than 10 g/g, equal to or greater than 15 g/g, equal to or greater than 20 g/g, or equal to or greater than 23 g/g or may be equal to or less than 60 g/g, equal to or less than 50 g/g, equal to or less than 40 g/g, equal to or less than 35 g/g, or equal to or less than 30 g/g.

The regeneration method according to the present embodiment is suitable for regenerating water-absorbing resin particles in which the water absorption amount of physiological saline under a load of 2.07 kPa before use (hereinafter, also simply referred to as "the water absorption amount under a load") is about 15 to 50 mL/g, for example. The regeneration method according to the present embodiment exhibits a particularly high regeneration effect in regeneration of the water-absorbing resin particles with the water absorption amount under a load before use is about 15 to 35 mL/g and can recover the water absorption amount under a load of the water-absorbing resin particles to a level equivalent to that before use or to a level close to that before use.

The water absorption amount under a load of the water-absorbing resin particles subjected to the regeneration method according to the present embodiment before use and after regeneration by the regeneration method according to the present embodiment may be equal to or greater than 15 mL/g, equal to or greater than 18 mL/g, or equal to or greater than 20 mL/g and may be equal to or less than 40 mL/g or equal to or less than 35 mL/g, for example.

The water-absorbing resin particles after the regeneration obtained by the regeneration method according to the present embodiment can be used for purposes similar to those of the water-absorbing resin particles before use, for example, in the fields of sanitary materials such as paper diapers and sanitary products, agricultural and horticultural materials such as water retention agents, soil improvement agents, industrial materials such as waterproofing agent and dew condensation inhibitors, and the like.

[Examples]

Although the content of the present invention will be described in more detail using examples and comparative examples, the present invention is not limited to the following examples.

[Production of water-absorbing resin particles]

A round-bottomed cylindrical separable flask with an inner diameter of 11 cm and 2L capacity including a reflux cooling device, a dropping funnel, a nitrogen gas introduction tube, and a stirring blade including four inclined paddle blades with a blade diameter of 5 cm in two stages as a stirrer was prepared. Into this flask, 293 g of n-heptane as a hydrocarbon dispersion medium was poured, 0.736 g of a maleic anhydride-modified ethylene-propylene copolymer (Mitsui Chemicals, Inc., HI-WAX 1105A) was added thereto as a polymer-based dispersant, and the temperature of the mixture was raised to 80°C while the mixture was stirred, thereby to dissolve the dispersant. The formed solution was cooled to 50°C.

Into a beaker with an internal volume of 300 mL, 92.0 g (1.03 mol) of 80.5% by mass acrylic acid aqueous solution was poured as a water-soluble ethylenically unsaturated monomer, 147.7 g of 20.9% by mass sodium hydroxide aqueous solution was dripped thereinto while the aqueous solution was cooled from the outside, thereby performing neutralization of 75 mol%. Thereafter, 0.092 g of hydroxyethyl cellulose as a thickener (Sumitomo Seika Chemicals Co., Ltd., HEC AW-15F), 0.0736 g (0.272 mmol) of potassium persulfate as a water-soluble radical polymerization agent, and 0.010 g (0.057 mmol) of ethylene glycol diglycidyl ether as an internal cross-linking agent were added thereto and dissolved therein, thereby preparing a first stage water-based solution.

The first stage water-based solution was added to the above flask, and the formed reaction solution was stirred for 10 minutes. Separately, 0.736 g of sucrose stearic acid ester (Mitsubishi-Chemical Foods Corporation, Ryoto Sugar Ester S-370, HLB: 3) as a surfactant was heated and dissolved in 6.62 g of n-heptane, thereby preparing a surfactant solution. The surfactant solution was added to the above flask, and the inside of the system was sufficiently replaced with nitrogen while stirring the mixture with the rotation frequency of the stirrer set at 550 rpm. Thereafter, the flask was immersed into a water bath at 70°C to raise the temperature of the reaction solution, and polymerization was performed for 60 minutes, thereby obtaining a first stage polymerization slurry solution.

Into another beaker with an internal volume of 500 mL, 128.8 g (1.44 mol) of 80.5% by mass of acrylic acid aqueous solution as a water-soluble ethylenically unsaturated monomer) was poured, 159.0 g of 27% by mass sodium hydroxide aqueous solution was dripped thereinto while the mixture was cooled from the outside, thereby performing neutralization of 75 mol%. Thereafter, 0.090 g (0.333 mmol) of potassium persulfate as a water-soluble radical polymerization initiator and 0.0117 g (0.067 mmol) of ethylene glycol diglycidyl ether as an internal crosslinking agent were added thereto and dissolved therein, thereby preparing a second stage water-based solution.

The inside of the flask system was cooled to 25°C while the mixture was stirred with the rotation frequency of the stirrer set at 1000 rpm, and the total amount of second stage water-based solution was then added to the first-stage polymerization slurry solution. The inside of the system was replaced with nitrogen for 30 minutes, the flask was then immersed in a water bath at 70°C again to raise the temperature, and a polymerization reaction was performed for 60 minutes, thereby obtaining a hydrogel-like polymer.

To the hydrogel-like polymer after the second stage polymerization, 0.589 g of 45% by mass diethylenetriamine pentaacetic acid pentasodium aqueous solution was added while the mixture was stirred. Thereafter, the above flask was immersed in an oil bath set at 125°C, and 247.9 g of water was extracted to the outside of the system while n-heptane was refluxed through azeotropic distillation of n-heptane and water. Thereafter, 4.42 g (0.507 mmol) of 2% by mass ethylene glycol diglycidyl ether aqueous solution as a surface crosslinking agent was added to the flask, and the mixture was held at 83°C for 2 hours.

Thereafter, polymer particles (dried product) were obtained by drying and evaporating n-heptane and water at 125°C. The polymer particles were caused to pass through a sieve with an opening of 850 $\mu$m, 0.5% by mass of amorphous silica (Oriental Silicas Corporation, Tokusil NP-S) with respect to the mass of the polymer particles was mixed with the polymer particles, thereby obtaining 230.0 g of water-absorbing resin particles containing amorphous silica. The medium particle diameter of the water-absorbing resin particles was 354 $\mu$m.

[Production of used water-absorbent resin particle model]

Into a 500 mL beaker, 500 g of JAYCO artificial urine was scaled. 2.0 g of water-absorbing resin particles produced in the above production example was dispersed in the artificial urine such that no lumps were generated while the artificial urine was stirred at 600 rpm using a magnetic stirrer bar (8 mm $\varphi$ × 30 mm without a ring). The stirring was continued for 60 minutes, thereby sufficiently causing the water-absorbing resin particles to be swollen. The content of the beaker was filtered using a JIS standard sieve with an opening of 75 $\mu$m. The sieve with the extracted swollen gel placed thereon was inclined at an inclination angle of about 30 degrees with respect to the horizontal direction and was left in the state for 30 minutes to remove excess water, thereby obtaining 122.0 g of artificial urine absorbed swollen gel (swollen water-absorbing resin particles). This swollen gel was used as a used water-absorbent resin particle model.

The composition of the used artificial urine was as follows.

Calcium chloride dihydrate: 0.025%
Diammonium hydrogen phosphate: 0.015%
Magnesium chloride hexahydrate: 0.0496%

Ammonium dihydrogen phosphate: 0.085%
Potassium chloride: 0.2%
Sodium sulfate: 0.2%
Distilled water: Residue

<Example 1>

(Treatment with hot water)

A round-bottomed cylindrical separable flask with an inner diameter of 110 mm and 2L capacity including a reflux cooling device and a stirring blade that includes four inclined paddle blades with a blade diameter of 50 mm in two stages as a stirrer was prepared. The above flask was filled with 90.0 g of the above artificial urine absorbed swollen gel and 1000 g of ion-exchanged water, and the mixture was immersed into an oil bath at 120°C and heated while being stirred at 600 rpm. The swollen gel was washed by being stirred for 1 hour after a timing when the internal temperature of the flask reached 100°C. The swollen gel after the washing was filtered using a JIS standard sieve with an opening of 75 $\mu$m. The sieve with the extracted swollen gel placed thereon was left with an inclination at an inclination angle of about 30 degrees with respect to the horizontal direction for 30 minutes to remove excess water from the swollen gel after the washing, thereby obtaining 220.0 g of swollen gel after the treatment with hot water.

(Treatment with hydrophilic organic solvent)

The following treatment with a hydrophilic organic solvent was performed in an environment at a temperature of 25 $\pm$ 2°C and with a humidity of 50 $\pm$10%. Into a 1000 mL beaker, 279.5 g of methanol was scaled. 215.0 g of swollen gel after the treatment with hot water was dispersed in methanol while methanol was stirred at 600 rpm using a magnetic stirrer bar (8 mm $\varphi \times$ 30 mm without a ring). The swollen gel was washed and dehydrated by continuing the stirring of methanol for 30 minutes. A gel after the treatment with methanol was obtained by filtering it using a JIS standard sieve with an opening of 75 $\mu$m. The sieve with the extracted gel placed thereon was inclined at an inclination angle of about 30 degrees with respect to the horizontal direction and was left in that state in a draft device for 30 minutes to remove excess water and methanol, thereby obtaining 7.6 g of gel after the first treatment with methanol.
279.5 g of methanol was scaled into a 1000 mL beaker, 7.4 g of gel after the first treatment with methanol was treated again with methanol similarly to the above-mentioned first treatment with methanol, thereby obtaining 5.6 g of gel after the second treatment with methanol.
279.5 g of methanol was scaled into a 1000 mL beaker, 5.4 g of gel after the second treatment with methanol was further treated with methanol similarly to the above-mentioned first treatment with methanol, thereby obtaining 5.3 g of gel after the third treatment with methanol.

(Drying)

A round-bottomed cylindrical separable flask with an inner diameter of 110 mm and 2L capacity including a reflux cooling device, a cooler, a flow divider tube, and a stirring blade including four inclined paddle blades with a blade diameter of 50 mm in two stages as a stirrer was prepared. The above flask was filled with 5.0 g of gel after the third treatment with methanol and 400 g of n-heptane. Thereafter, the above flask was immersed into an oil bath at 125°C, and water was extracted to the outside of the system until the internal temperature of the flask became 98°C while n-heptane was refluxed through azeotropic distillation of n-heptane, water, and methanol. Thereafter, n-heptane, methanol, and water were distilled away through heating at 125°C, thereby obtaining 1.1 g of regenerated water-absorbing resin particles.

<Comparative Example 1>

Treatment of an artificial urine absorbed swollen gel with hot water was performed similarly to Example 1, thereby obtaining 219.2 g of swollen gel after the treatment with hot water. A round-bottomed cylindrical separable flask with an inner diameter of 110 mm and 2L capacity including a reflux cooling device, a cooler, a flow divider tube, and a stirring blade including four inclined paddle blades with a blade diameter of 50 mm in two stages as a stirrer was prepared. The above flask was filled with 110.0 g of swollen gel after the treatment with hot water and 400 g of n-heptane. Thereafter, the above flask was immersed into an oil bath at 125°C, and water was extracted to the outside of the system until the internal temperature of the flask became 98°C while n-heptane was refluxed through azeotropic distillation of n-heptane, water, and methanol. Thereafter, n-heptane, methanol, and water were distilled away through heating at 125°C, thereby obtaining 0.6 g of regenerated water-absorbing resin particles.

<Comparative Example 2>

Into a 1000 mL beaker, 116.0 g of methanol was scaled. 90.0 g of artificial urine absorbed swollen gel was dispersed in methanol while methanol was stirred at 600 rpm using a magnetic stirrer bar (8 mm $\varphi \times$ 30 mm without a ring). The swollen gel was washed with methanol and dehydrated by continuing the stirring for 30 minutes. The gel after the treatment with methanol was filtered using a JIS standard sieve with an opening of 75 $\mu$m. The sieve with the extracted gel placed thereon was inclined at an inclination angle of about 30 degrees with respect to the horizontal direction and was left in that state for 30 minutes to remove excess water and methanol. 22.2 g of gel after the first treatment with methanol was obtained.

116.0 g of methanol was scaled into a 1000 mL beaker, 22.0 g of gel after the first treatment with methanol was treated again with methanol similarly to the above-mentioned first treatment with methanol in Comparative Example 2, thereby obtaining 11.6 g of gel after the second treatment with methanol.

116.0 g of methanol was scaled into a 1000 mL beaker, 11.4 g of gel after the second treatment with methanol was further treated with methanol similarly to the above-mentioned first treatment with methanol in Comparative Example 2, thereby obtaining 11.2 g of gel after the third treatment with methanol.

A round-bottomed cylindrical separable flask with an inner diameter of 110 mm and 2L capacity including a reflux cooling device, a cooler, a flow divider tube, and a stirring blade including four inclined paddle blades with a blade diameter of 50 mm in two stages as a stirrer was prepared. The above flask was filled with 11.0 g of gel after the third treatment with methanol and 400 g of n-heptane. Thereafter, the above flask was immersed into an oil bath at 125°C, and water was extracted to the outside of the system until the internal temperature of the flask became 98°C while n-heptane was refluxed through azeotropic distillation of n-heptane, water, and methanol. Thereafter, n-heptane, methanol, and water were distilled away through heating at 125°C, thereby obtaining 1.5 g of regenerated water-absorbing resin particles.

<Evaluation>

CRC and the water absorption amount under a load were measured for the obtained regenerated water-absorbing resin particles by the following method. Also, CRC and the water absorption amount under a load were similarly measured for the water-absorbing resin particles (water-absorbing resin particles before water absorption) obtained in the above production example. The results are shown in Table 1.

<CRC measurement method>

CRC of the water-absorbing resin particles was measured by the following procedure with reference to an EDANA method (NWSP 241.0.R2(15), page 769 to 778). The measurement was performed in an environment at a temperature of 25 $\pm$ 2°C and with a humidity of 50 $\pm$10.

A non-woven fabric with a size of 60 mm $\times$ 170 mm (product name: Heat pack MWA-18 manufactured by Nippon Paper Papylia Co., Ltd.) was folded into a half in the longitudinal direction to adjust the size into 60 mm $\times$ 85 mm. The non-woven fabric at each of both sides extending in the longitudinal direction was pressure-bonded through heat sealing, thereby producing a non-woven fabric bag of 60 mm $\times$ 85 mm (pressure-bonded portions with a width of 5 mm were formed at both sides along the longitudinal direction). 0.2 g of water-absorbing resin particles was precisely scaled and accommodated inside the non-woven fabric bag. Thereafter, a remaining side extending in a lateral direction was pressure-bonded through heat sealing, thereby closing the non-woven fabric bag.

The entire non-woven fabric bag was completely wetted by causing the non-woven fabric bag to float in 1000 g of physiological saline accommodated in a stainless steel tray (240 mm $\times$ 320 mm $\times$45 mm) in a state in which the non-woven fabric bag was not folded in an overlapping manner. The non-woven fabric bag with the gel accommodated therein was obtained by immersing the non-woven fabric bag into physiological saline with a spatula 1 minute after putting the non-woven fabric bag into the physiological saline.

The non-woven fabric bag was extracted from the physiological saline 30 minutes (a total of a time for floating for 1 minute and a time for immersion for 29 minutes) after putting the non-woven fabric bag into physiological saline. Then, the non-woven fabric bag was put into a centrifuge. After the centrifugal force in the centrifuge reaches 250 G, dehydration of the non-woven fabric bag was performed for 3 minutes. After the dehydration, the mass Ma of the non-woven fabric bag including the mass of gel was scaled. Operations similar to the above-mentioned operations were performed on the non-woven fabric bag without accommodating the water-absorbing resin particles, and the mass Mb of the non-woven fabric bag was measured. CRC was calculated on the basis of the following equation. Mc is a precisely scaled value of the mass 0.2 g of water-absorbing resin particles used for measurement. The results are shown in Table 1.

$$CRC\ [g/g] = [(Ma - Mb) - Mc\}/Mc$$

<Water absorption amount under load>

The water absorption amount of the water-absorbing resin particles with respect to physiological saline under a load of 2.07 kPa was measured using a measurement device Y illustrated in FIG. 1 in an environment at a temperature of 25 ± 2°C and with a humidity of 50 ±10. The measurement device Y is configured with a burette unit 71, a conduit 72, a measurement table 73, and a measurement unit 74 placed on the measurement table 73. The burette unit 71 includes a burette 71a stretching in the vertical direction, a rubber stopper 71b disposed at an upper end of the burette 71a, a cock 71c disposed at a lower end of the burette 71a, an air introduction tube 71d with one end stretching to the inside of the burette 71a in the vicinity of the cock 71c, and a cock 71e disposed on the side of the other end of the air introduction tube 71d. The conduit 72 is attached between the burette unit 71 and the measurement table 73. The inner diameter of the conduit 72 is 6 mm. A hole with a diameter of 2 mm is opened at a central portion of the measurement table 73, and the conduit 72 is coupled thereto. The measurement unit 74 includes a cylinder 74a (made of an acrylic resin (plexiglass)), a nylon mesh 74b caused to adhere to a bottom of the cylinder 74a, and a weight 74c. The inner diameter of the cylinder 74a was 20 mm. The opening of the nylon mesh 74b was 75 μm (200 meshes). Also, water-absorbing resin particles 75 as targets of the measurement are uniformly sprayed to the nylon mesh 74b at the time of the measurement. The diameter of the weight 74c is 19 mm, the mass of the weight 74c is 59.8 g. The weight 74c is placed on the water-absorbing resin particles 75, and a load of 2.07 kPa can be added to the water-absorbing resin particles 75. The inside of the burette 71a of the device Y is filled with physiological saline up to a location with a scale, and the hole of the cock 71c, the inside of the conduit 72, and the hole at the center of the measurement table 73 are filled with the saline.

After putting 0.100 g of water-absorbing resin particles 75 into the cylinder 74a of the measurement device Y, the weight 74c was placed thereon, and measurement was started. Since the same volume of air as that of physiological saline absorbed by the water-absorbing resin particles 75 is quickly and smoothly supplied to the inside of the burette 71a through the air introduction tube, the amount of reduction in water level of the physiological saline inside the burette 71a corresponds to the amount of physiological saline absorbed by the water-absorbing resin particles 75. The scales of the burette 71a are engraved at every 0.5 mL from 0 mL in the downward direction from the top. As water levels of the physiological saline, a scale Va of the burette 71a before the start of water absorption and a scale Vb of the burette 71a 60 minutes after the start of water absorption were read, and the water absorption amount under a load (the water absorption amount of the physiological saline under a load of 2.07 kPa) was calculated by the following equation.

$$\text{Water absorption amount under the load } [mL/g] = (Vb - Va)/0.1$$

<Amount of reduction after drying>

The amount of reduction of the water-absorbing resin particles after drying was measured by the following method. About 0.3 g of water-absorbing resin particles were taken in an aluminum foil case (No. 8) that had been set to a constant weight (W3 (g)) in advance, and the total mass W4 (g) was precisely scaled. The precisely scaled powder was dried with a hot air drier (manufactured by ADVANTEC, model: FV-320) at the internal temperature set to 105°C for two hours. After the powder was left and cooled in a desiccator, the total mass W5 (g) of the aluminum foil case and the water-absorbing resin particles were measured as a dried mass. The amount of reduction of the water-absorbing resin particles after drying was calculated by the following equation.

$$\text{Amount of reduction after drying (\% by mass)} = [\{(W4 - W3) - (W5 - W3)\}/(W4 - W3)] \times 100$$

[Table 1]

| | Treatment with hot water | Treatment with hydrophilic organic solvent | Water absorption performance | | Amount of reduction after drying (%) |
|---|---|---|---|---|---|
| | | | CRC (g/g) | Water absorption amount under load (mL/g) | |
| Example 1 | Done | Done | 28 | 30 | 8 |
| Comparative Example 1 | Done | Not done | 28 | 20 | 9 |
| Comparative Example 2 | Not done | Done | 25 | 31 | 8 |
| Water-absorbing resin particles before water absorption | | | 28 | 30 | 8 |

The water absorption performance of the regenerated water-absorbing resin particles obtained in Example 1 was recovered to a level equivalent to that of the particles before water absorption. Also, the regenerated water-absorbing resin particles obtained in Example 1 were observed with a scanning electron microscope, and the appearance was recovered to a level that was not able to be distinguished from that of the particles before water absorption.

On the other hand, partial degradation of water absorption performance was observed in the regenerated water-absorbing resin particles obtained in the comparative examples as compared with the particles before water absorption. Also, the regenerated water-absorbing resin particles in Comparative Example 1 were observed with a scanning electron microscope, each spherical particle constituting the water-absorbing resin particles had a collapsed shape.

**Reference Signs List**

71: Burette unit, 71a: Burette, 71b: Rubber stopper, 71c: Cock, 71d: Air introduction tube, 71e: Cock, 72: Conduit, 73: Measurement table, 74: Measurement unit, 74a: Cylinder, 74b: Nylon mesh, 74c: Weight, 75: Water-absorbent resin particle, Y: Measurement device

**Claims**

1.   A method for regenerating water-absorbing resin particles comprising:

   treating water-absorbing resin particles that have absorbed water with hot water; and
   treating the water-absorbing resin particles after the hot water treatment with a hydrophilic organic solvent.

2.   The method according to claim 1, further comprising:
   removing at least a part of water and the solvent from the water-absorbing resin particles after the treatment with the hydrophilic organic solvent to adjust a total amount of the water and the solvent to 15 % by mass or less with respect to a total amount of solid content of the water-absorbing resin particles, the water and the solvent.

# *Fig.1*

## INTERNATIONAL SEARCH REPORT

| | International application No. |
|---|---|
| | PCT/JP2020/038947 |

**A. CLASSIFICATION OF SUBJECT MATTER**
B01J 20/26(2006.01)i; B01J 20/34(2006.01)i
FI: B01J20/34 G; B01J20/34 H; B01J20/26 D
According to International Patent Classification (IPC) or to both national classification and IPC

**B. FIELDS SEARCHED**

Minimum documentation searched (classification system followed by classification symbols)
B01J20/26; B01J20/34

| Documentation searched other than minimum documentation to the extent that such documents are included in the fields searched | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2003-326161 A (NIPPON SHOKUBAI CO., LTD.) 18 November 2003 (2003-11-18) claims, paragraphs [0027]-[0046], examples | 1-2 |
| A | JP 2013-198862 A (NATIONAL UNIVERSITY CORPORATION HOKKAIDO UNIVERSITY) 03 October 2013 (2013-10-03) entire text, all drawings | 1-2 |
| A | JP 2015-120834 A (LIVEDO CORP.) 02 July 2015 (2015-07-02) entire text, all drawings | 1-2 |
| A | JP 2012-219172 A (MITSUI CHEMICALS, INC.) 12 November 2012 (2012-11-12) entire text, all drawings | 1-2 |
| E, A | JP 6771633 B1 (UNI-CHARM CORP.) 21 October 2020 (2020-10-21) entire text, all drawings | 1-2 |

☐ Further documents are listed in the continuation of Box C. ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 04 December 2020 (04.12.2020) | 22 December 2020 (22.12.2020) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

Information on patent family members

International application no.

PCT/JP2020/038947

| Patent Documents referred in the Report | Publication Date | Patent Family | Publication Date |
|---|---|---|---|
| JP 2003-326161 A | 18 Nov. 2003 | (Family: none) | |
| JP 2013-198862 A | 03 Oct. 2013 | US 2015/0045461 A1 entire text, all drawings WO 2013/141357 A1 entire text, all drawings | |
| JP 2015-120834 A | 02 Jul. 2015 | (Family: none) | |
| JP 2012-219172 A | 12 Nov. 2012 | (Family: none) | |
| JP 6771633 B1 | 21 Oct. 2020 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013198862 A

**Non-patent literature cited in the description**

- *NWSP 241.0,* vol. R2 (15), 769-778